# EUROPEAN PATENT APPLICATION

(11) **EP 2 434 831 A1**
(43) Date of publication of application: **28.03.2012**
(21) Application number: 10777355.8
(22) Date of filing: 14.05.2010
(51) Int. Cl.: H04W 84/00

(54) **SYSTEM AND METHOD FOR REMOTE RADIO UNIT FINDING AND TOPOLOGY STRUCTURE ESTABLISHMENT**

(30) Priority: 18.05.2009 CN 200910202915
(71) Applicant: ZTE Corporation, Shenzhen, Guangdong 518057 (CN)
(72) Inventor: ZHAO, Qingyuan, Shenzhen Guangdong 518057 (CN)
(74) Representative: Waddington, Richard
(86) International application number: PCT/CN2010/072792
(87) International publication number: WO 2010/133152

(57) **Abstract**

The present invention discloses a system and method for discovering a remote radio unit and establishing a topology structure, which include: a base band unit sending a remote radio unit discovery message to a link connecting with a remote radio unit after starting, and the remote radio unit discovery message including a level number of a remote radio unit, and setting this level number to a minimal value; a remote radio unit which receives said remote radio unit discovery message storing the level number in the remote radio unit discovery message, and sending said remote radio unit discovery message to a next level remote radio unit connecting with said remote radio unit after adding 1 to the level number in said remote radio unit discovery message; and the remote radio unit feeding the level number back to said base band unit after obtaining the level number. By adopting the scheme of the present invention, it implements the self-establishment of the remote radio unit topology structure when the base band unit and remote radio unit are in the separate deployment, reduces the intervention of the human to the network, reduces the network maintenance cost, and complies with the development trend of the radio network management.

## Description

### Technical Field

The present invention relates to the radio communication system, and particularly, to a system and method for self-discovering a Remote Radio Unit (RRU) and self-establishing a topology structure in the radio communication system.

### Background of the Related Art

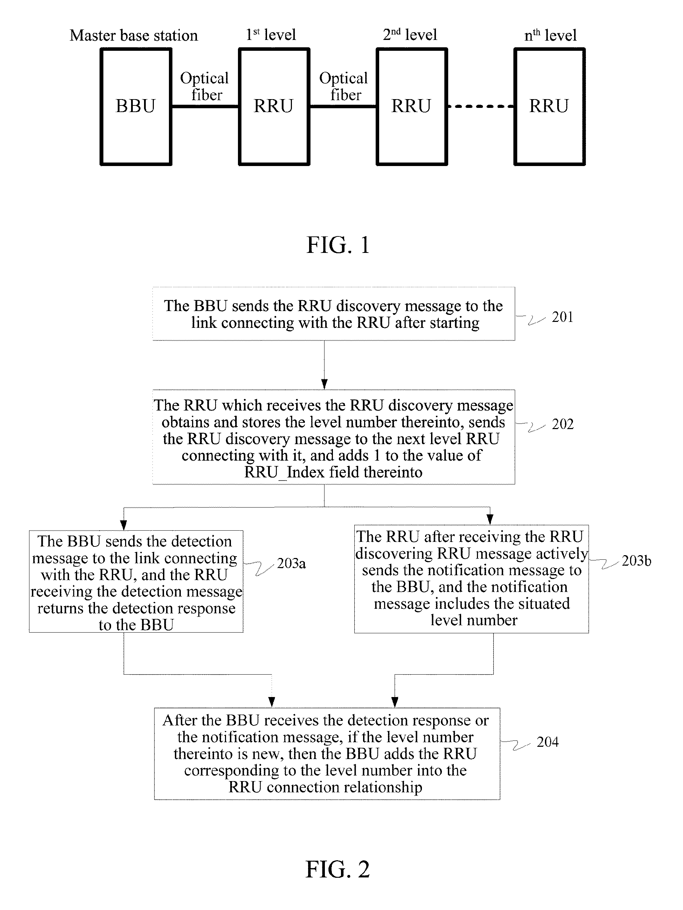

The mainstream deployment architecture of the current radio communication system is the separation of the Base Band Unit (BBU) and remote radio unit, which are connected by the optical fiber therebetween and communicate by use of a serial of messages, as shown in FIG. 1. In this case, the connection situations of the RRU (namely the topology structure) and RRU should be added manually on the network management according to the traditional network management methods, then the BBU can just know the existence of the RRU, and will just carry out message communication with the RRU, and then the RRU can just work normally. If the topology structure of the RRU changes, the original configuration should be modified on the network management.

In the 3rd generation mobile communication Long Term Evolution (LTE) system, a new network management concept is introduced--the Self-Organizing Network (SON), and the core concept of the SON is to reduce the intervention of the human to the network as much as possible, and to be able to implement the self-discovering of the system, namely "plug and play", and the above described network management method of existing base band unit and remote radio unit is obviously acting counter to the concept of the self-discovery and self-adaptation of the SON.

### Summary of the Invention

The technical problem to be solved in the present invention is to provide a system and method for self-discovering a RRU and self-establishing a topology structure, which implements a self-establishment of the RRU topology structure when the BBU and RRU are in a separate deployment.

In order to solve the above problem, the present invention provides a method for discovering a remote radio unit and establishing a topology structure, which comprises: a base band unit sending a remote radio unit discovery message to a link connecting with a remote radio unit after starting, and the remote radio unit discovery message including a level number of the remote radio unit, and setting this level number to a minimal value; a remote radio unit which receives said remote radio unit discovery message storing the level number in the remote radio unit discovery message, and sending said remote radio unit discovery message to a next level remote radio unit connecting with said remote radio unit after adding 1 to the level number in said remote radio unit discovery message; and the remote radio unit feeding the level number back to said base band unit after obtaining the level number, so as to implement self-discovery of the remote radio unit and self-establishment of the topology structure.

Said method further comprises: said base band unit periodically sending a detection message to the link connecting with the remote radio unit;
said step of the remote radio unit feeding the level number back to said base band unit after obtaining the level number comprises: the remote radio unit which receives the detection message forwarding the detection message to a next level remote radio unit connecting with this remote radio unit, transparently transmitting a detection response to the base band unit through a previous level remote radio unit connecting with this remote radio unit, and the detection response including the level number stored by this remote radio unit;
said method further comprises: after said base band unit receives the detection response, if the level number in the detection response is new, then adding the remote radio unit corresponding to the level number in a remote radio unit connection relationship.

Said step of the remote radio unit feeding the level number back to said base band unit after obtaining the level number comprises:
said remote radio unit transparently transmitting a notification message to the base band unit through a previous level remote radio unit connecting with this remote radio unit after receiving the remote radio unit discovery message, and the notification message including the level number stored by this remote radio unit;
said method further comprises: after the base band unit receives the notification message, if the level number in the notification message is new, adding the remote radio unit corresponding to the level number in the remote radio unit connection relationship.

Said method further comprises: if said base band unit does not receive the detection response or the notification message sent by a remote radio unit of a known level number in the remote radio unit connection relationship in a pre-set time, then deleting the remote radio unit of this level number from said remote radio unit connection relationship.

The step of sending the remote radio unit discovery message comprises: said base band unit periodically sending said remote radio unit discovery message; and
denoting the level number of the remote radio unit using an RRU_Index field in said remote radio unit discovery message, and setting a value of said RRU_Index field as i to denote that the remote radio unit is in a i+1^{th} level.

The present invention further provides a system for discovering a remote radio unit and establishing a topology structure, which comprises: a base band unit and a remote radio unit; the number of said remote radio unit being one or more; wherein
said base band unit is configured to send a remote radio unit discovery message to a link connecting with a remote radio unit after starting, the remote radio unit discovery message including a level number of a remote radio unit, and set this level number to a minimal value;
said remote radio unit is configured to: after receiving said remote radio unit discovery message, store the level number in the remote radio unit discovery message, and send said remote radio unit discovery message to a next level remote radio unit connecting with the remote radio unit after adding 1 to the level number in said remote radio unit discovery message; and feed the level number of the remote radio unit back to said base band unit,
to implement self-discovery of the remote radio unit and self-establishment of the topology structure.

Said base band unit is further configured to: periodically send a detection message to the link connecting with the remote radio unit, and receive a detection response, and add the remote radio unit corresponding to the level number in a remote radio unit connection relationship if the level number included in the detection response is new;
said remote radio unit is further configured to: forward the detection message to a next level remote radio unit connecting with this remote radio unit after receiving the detection message;
said remote radio unit is configured to feed the level number of this remote radio unit back to the base band unit in a following way:
a remote radio unit of level number i returning a detection response to a previous level remote radio unit connecting with the remote radio unit of level number i after receiving the detection message, and the detection response including the level number stored by this remote radio unit; and transparently transmitting a received detection response to a previous level remote radio unit connecting with this remote radio unit, and 2≤i≤n;
a remote radio unit of level number 1 returning the detection response to the base band unit after receiving detection message, and the detection response including the level number stored by the remote radio unit of level number 1; and transparently transmitting a received detection response to the base band unit.

Said remote radio unit is configured to feed the level number of the remote radio unit back to said base band unit in a following way:
a remote radio unit of level number i sending a notification message to a previous level remote radio unit connecting with the remote radio unit of level number i after receiving the remote radio unit discovery message, and the notification message including the level number stored by this remote radio unit; and transparently transmitting a received notification message to a previous level remote radio unit connecting with this remote radio unit, and 2≤i≤n;
a remote radio unit of level number 1 sending the notification message to the base band unit after receiving the remote radio unit discovery message, and the notification message including the level number stored by the remote radio unit of level number 1; and transparently transmitting a received notification message to the base band unit;
said base band unit is further configured to: add the remote radio unit corresponding to the level number in a remote radio unit connection relationship if the level number in the notification message is new after receiving the notification message.

Said base band unit is further configured to: delete a remote radio unit of a known level number from said remote radio unit connection relationship if said base band unit does not receive the detection response or the notification message sent by the remote radio unit of a known level number in the remote radio unit connection relationship in a pre-set time.

Said base band unit is configured to send the remote radio unit discovery message in a following way:
periodically sending said remote radio unit discovery message; and
denoting the level number of the remote radio unit using an RRU_Index field in said remote radio unit discovery message, and setting a value of said RRU_Index field as i to denote that the remote radio unit is in a i+1^{th} level.

As a conclusion, a system and method for self-discovering a RRU and self-establishing a topology structure provided in the present invention implement self-establishing the RRU topology structure when the BBU and RRU are in the separate deployment, and reduce the intervention of the human to the network, and reduce the network maintenance cost, and complies with the development trend of the radio network management. The scheme of the present invention is suitable for the radio communication system, for example the LTE.

### Brief Description of Drawings

FIG. 1 is a diagram of the connection of the BBU and RRU;
FIG. 2 is a flow chart of the implementation of the method according to the present invention;
FIG. 3 is a flow chart of the example one according to the present invention;
FIG. 4 is a flow chart of the example two according to the present invention.

### Preferred Embodiments of the Present Invention

The present invention provides a system and method for self-discovering a RRU and self-establishing a topology structure, and the base band unit sends a discovery message to the remote radio unit link after starting, the discovery message includes the level number of the remote radio unit, and the level number is set to the minimal value, the remote radio unit receiving said discovery message stores the level number thereinto, and adds 1 to the level number in said discovery message and then sends said discovery message to the next level remote radio unit connected with it; the remote radio unit obtaining the level number feeds the level number back to the base band unit.

This example provides a system for self-discovering a RRU and self-establishing a topology structure, and as shown in FIG. 1, the system comprises a BBU and one or more RRUs;
the BBU connects with the RRUs through the optical fiber, and the adjacent RRUs are also connected through the optical fiber;
the BBU is used for sending an RRU_Index (RRU discovery) message to the link connecting with the RRU, and this message includes one field denoting the RRU level number, for example it can be the RRU_Index, and the BBU sets the field denoting the level number to be the minimal value when sending the RRU_Index message, for example the RRU_Index field can be set to 0 to denote the first level; and the RRU_Index message can be sent periodically.

The BBU can be further used for sending a detection message to the link connecting with the RRU, and the detection message can be sent periodically; and receiving the detection response returned by the RRU, and adding this RRU into the corresponding position of the RRU connection relationship according to the level number in the detection response;
the BBU can be further used for receiving the notification message sent by the RRU, and adding this RRU into the corresponding position of the RRU connection relationship according to the level number thereinto;
the BBU can be further used for deleting this RRU from the RRU connection relationship after not receiving the detection response or notification message sent by the RRU of a certain level in the RRU connection relationship in the pre-set time.

The RRU is used for receiving the RRU discovery message (for example RRU_Index) through the optical fiber, storing the level number thereinto, and if the RRU_Index field thereinto is i, then storing its situated level number as i+1, and is further for adding 1 to the field denoting the level number to send the RRU_Index message to the next level RRU connecting with this RRU. Therefore, for the first RRU receiving the RRU_Index message, the RRU_Index field value is 0, then the level number of this RRU is 1, and for the second RRU receiving the RRU_Index message, the RRU_Index field value is 1, and the level number of this RRU is 2, and so on, for the n+1^{th} RRU receiving the RRU_Index message in the link, the RRU_Index field value is n, and the level number of this RRU is n+1.

The RRU of level number i is further used for returning the detection response to the previous level RRU (namely the RRU sending the detection message) connecting with the RRU of level number i after receiving the detection message, and the detection response includes the level number stored by the RRU of level number i; and transparently transmitting the received detection response to the previous level RRU connecting with the RRU of level number i, 2≤i≤n;
the RRU of level number 1 is further used for returning the detection response to the base band unit after receiving the detection message, and the detection response includes its stored level number; and transparently transmitting the received detection response to the BBU.

The RRU of level number i can be further used for sending the notification message to the previous level RRU connecting with the RRU of level number i after receiving the RRU discovery message, and the notification message includes the level number stored by the RRU of level number i; and transparently transmitting the received notification message to the previous level RRU connecting with the RRU of level number i, 2≤i≤n;
the RRU of level number 1 can be further used for sending the notification message to the BBU after receiving the RRU discovery message, and the notification message includes the level number stored by the RRU of level number 1; and transparently transmitting the received notification message to the BBU.

This example provides a method for self-discovering a RRU and self-establishing a topology structure, and steps of this method are as follows:
step 201, the BBU sends the RRU discovery message (for example the RRU_Index) to the link connecting with the RRU after starting, and this message includes one field denoting the level number of the RRU, for example it can be the RRU_Index, and the BBU sets the field denoting the level number to be the minimal value when sending the RRU_Index message, for example the RRU_Index field can be set to 0 to denote the first level; and the RRU_Index message can be sent periodically.

Herein the RRU discovery message also can be replaced by the control word with the same function or other ways.

Step 202, the RRU which receives the RRU_Index message obtains and stores the level number thereinto, for example, when the RRU_Index field value is i, stores the level number where the RRU receiving the RRU_Index message is situated as i+1, and sends the RRU_Index message to the next level RRU connecting with this RRU which receives the RRU_Index message, and adds 1 to the RRU_Index field value thereinto;
specifically, if the RRU_Index field value obtained by the first RRU which receives the RRU_Index message is 0, then it situated level number is 1, and if the RRU_Index field value obtained by the second RRU which receives the RRU_Index message is 1, then it situated level number is 2, and so on, and if the RRU_Index field value obtained by the n+1^{th} RRU in the link which receives the RRU_Index message is n, then level number of this n+1^{th} RRU is n+1.

Step 203 a, the BBU sends the detection message to the link connecting with the RRU, the detection message can be sent periodically; the RRU receiving the detection message returns the detection response to the BBU, and the detection response includes the situated level number; and this detection response is transparently transmitted to the BBU through the previous level RRU connecting with this RRU.

Step 203b, the RRU after receiving the RRU discovery RRU message actively sends the notification message to the BBU, and the notification message includes the situated level number, and this notification message can be sent periodically; and this notification message is transparently transmitted to the BBU through the previous level RRU connecting with this RRU.

Step 204, after the BBU receiving the detection response or the notification message, if the level number thereinto is new (namely receiving the message sent by the RRU of this level number for the first time), then the BBU adds the RRU corresponding to the level number into the RRU connection relationship.

If the BBU does not receive the detection response or the notification message sent by the RRU of a certain known level number in the RRU connection relationship in the pre-set time, then the BBU considers that this RRU has been deleted, and deletes this RRU from the RRU connection relationship to form a new RRU connection topology. The RRUs after this RRU are deleted all together since the sent messages are unable to be forwarded to the BBU.

In order to further describe the present invention, below it will take the 3 level RRUs as an example to describe the summary of the invention in detail.

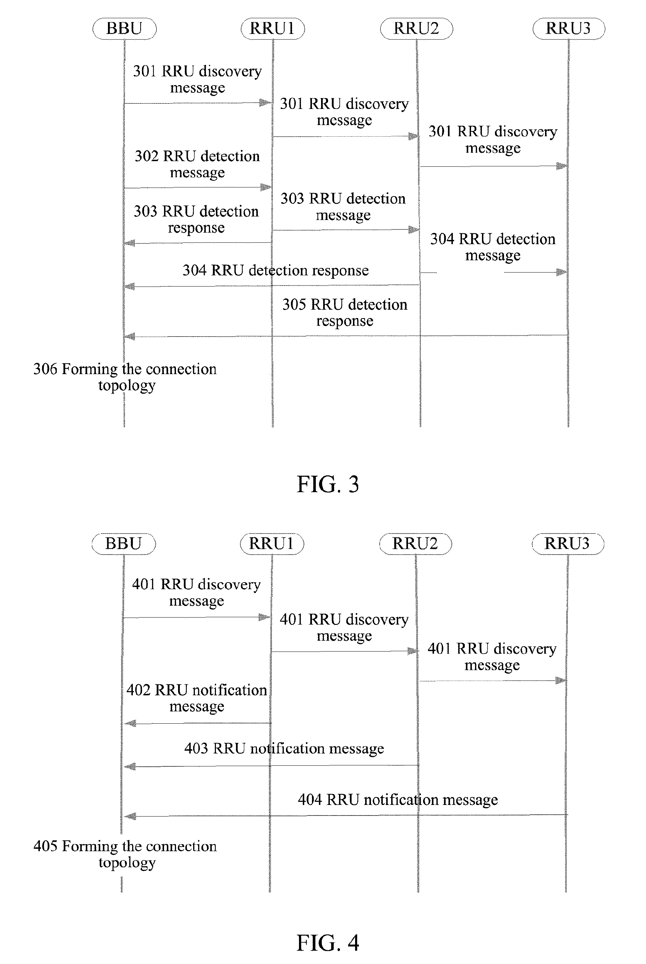

The application example one, as shown in FIG. 3:
step 301: the BBU periodically sends the RRU_Index message to the link connecting with the RRU after starting, and the RRU_Index message includes one RRU_Index field, and the RRU_Index field value is 0 when the BBU sends this message, and the value of this field is 0, denoting that the RRU1 itself is situated in the first level when the RRU1 in the link receives this message, then RRU1 adds 1 to the RRU_Index to continue sending to the RRU2, and the value of this field received by the RRU2 is 1, denoting that the RRU2 itself is situated in the second level, and the RRU2 adds 1 and then continues sending to the RRU3, and the value of this field received by the RRU3 is 2, denoting that the RRU3 itself is situated in the 3^{rd} level.
Step 302, the BBU periodically sends the RRU detection message to the link connecting with the RRU.
Step 303, the RRU1 receives the detection message sent by the BBU, forwards this message to the RRU2, and replies the detection response to the BBU, and the message should include the self position in the link obtained in the first step, which denotes the RRU1 itself is the first level RRU.
Step 304, RRU2 receives the detection message of the BBU forwarded by the RRU1, forwards this message to the RRU3, and replies the detection response to the BBU, and the message should includes the self position in the link obtained in the first step, which denotes that the self is the second level RRU.
Step 305, RRU3 receives the detection message of the BBU forwarded by the RRU2, and replies the detection response to the BBU, and the message should includes the self position in the link obtained in the first step, which denotes that the self is the third level RRU.
Step 306, after the BBU receives the detection response of RRU, if the BBU receives the detection response of a certain RRU for the first time, the BBU namely considers that this RRU is new, and adds the RRU into the RRU connection relationship data as shown in FIG. 1 according to the RRU position, and the RRU connection topology can be formed.

If the BBU does not receive the detection response of a certain RRU on the link in the pre-set time, then it is namely considered that this RRU has been deleted, and the RRU is deleted from the RRU connection relationship data to form a new RRU connection topology.

The application example two, as shown in FIG. 4:
step 401: the BBU periodically sends the RRU_Index message to the link connecting with the RRU after starting, and the RRU_Index message includes one RRU_Index field, and the RRU_Index field value is 0 when the BBU sends this message, and the value of this field is 0, denoting that the RRU1 itself is situated in the first level when the RRU1 in the link receives this message, then RRU1 adds 1 to the RRU_Index to continue sending to the RRU2, and the value of this field received by the RRU2 is 1, denoting that the RRU2 itself is situated in the second level, and the RRU2 adds 1 and then continues sending to the RRU3, and the value of this field received by the RRU3 is 2 denoting that the RRU3 self is situated in the 3^{rd} level.
Step 402, the RRU1 periodically sends the notification message to the BBU after obtaining its own level in the link, and the message should include the self position in the link obtained in the first step, which denotes that the self is the first level RRU.
Step 403, the RRU2 periodically sends the message to the BBU after obtaining its own level in the link, and the message should include the self position in the link obtained in the first step, which denotes that the self is the second level RRU.
Step 404, the RRU3 periodically sends the message to the BBU after obtaining its own level in the link, and the message should include the self position in the link obtained in the first step, which denotes that the self is the third level RRU.
Step 405, after BBU receives the message of the RRU, if the BBU receives the message of a certain RRU for the first time, the BBU considers that this RRU is new, adds this RRU into the RRU connection database table as shown in FIG. 1 according to the RRU position, and then the RRU connection topology can just be formed.

If the BBU does not receive the message of a certain RRU in the link in the pre-set time, the BBU considers that this RRU has been deleted, and deletes the RRU from the RRU connection database table (the RRUs after this RRU are therefore deleted all together since the sent messages are unable to be forwarded to the BBU), and new RRU connection topology is formed.

### Industrial Applicability

The scheme of present invention is suitable for the radio communication system, for example the LTE, and implements the self-establishment of the RRU topology structure when the BBU and RRU are in the separate deployment, reduces the intervention of the human to the network, reduces the network maintenance cost, and complies with the development trend of the radio network management.

## Claims

1. A method for discovering a remote radio unit and establishing a topology structure, which comprises:
a base band unit sending a remote radio unit discovery message to a link connecting with the remote radio unit after starting, and the remote radio unit discovery message including a level number of the remote radio unit, and setting this level number to a minimal value;
the remote radio unit which receives said remote radio unit discovery message storing the level number in the remote radio unit discovery message, and sending said remote radio unit discovery message to a next level remote radio unit connecting with said remote radio unit after adding 1 to the level number in said remote radio unit discovery message; and
the remote radio unit feeding the level number back to said base band unit after obtaining the level number,
to implement self-discovery of the remote radio unit and self-establishment of the topology structure.

2. The method as claimed in claim 1, said method further comprising: said base band unit periodically sending a detection message to the link connecting with the remote radio unit;
the step of the remote radio unit feeding the level number back to said base band unit after obtaining the level number comprising: the remote radio unit which receives the detection message forwarding the detection message to the next level remote radio unit connecting with this remote radio unit, transparently transmitting a detection response to the base band unit through a previous level remote radio unit connecting with this remote radio unit, and the detection response including the level number stored by this remote radio unit;
said method further comprising: after said base band unit receives the detection response, if the level number in the detection response is new, then adding the remote radio unit corresponding to the level number in a remote radio unit connection relationship.

3. The method as claimed in claim 2, said method further comprising:
if said base band unit does not receive the detection response sent by the remote radio unit of a known level number in the remote radio unit connection relationship in a pre-set time, then deleting the remote radio unit of this level number from said remote radio unit connection relationship.

4. The method as claimed in claim 1, wherein
the step of the remote radio unit feeding the level number back to said base band unit after obtaining the level number comprises: said remote radio unit transparently transmitting a notification message to the base band unit through a previous level remote radio unit connecting with this remote radio unit after receiving the remote radio unit discovery message, and the notification message including the level number stored by this remote radio unit;
said method further comprises: after the base band unit receives the notification message, if the level number in the notification message is new, adding the remote radio unit corresponding to the level number in a remote radio unit connection relationship.

5. The method as claimed in claim 4, said method further comprising:
if said base band unit does not receive the notification message sent by the remote radio unit of a known level number in the remote radio unit connection relationship in a pre-set time, then deleting the remote radio unit of this level number from said remote radio unit connection relationship.

6. The method as claimed in claim 1, wherein:
the step of sending the remote radio unit discovery message comprises:
said base band unit periodically sending said remote radio unit discovery message; and
denoting the level number of the remote radio unit using a remote radio unit discovery (RRU_Index) field in said remote radio unit discovery message, and setting a value of said RRU_Index field as i to denote that the remote radio unit is in a i+1^{th} level.

7. A system for discovering a remote radio unit and establishing a topology structure, which comprises: a base band unit and the remote radio unit, the number of said remote radio unit being one or more; wherein
said base band unit is configured to send a remote radio unit discovery message to a link connecting with the remote radio unit after starting, the remote radio unit discovery message including a level number of the remote radio unit, and set this level number to a minimal value;
said remote radio unit is configured to:
after receiving said remote radio unit discovery message, store the level number in the remote radio unit discovery message, and send said remote radio unit discovery message to a next level remote radio unit connecting with the remote radio unit after adding 1 to the level number in said remote radio unit discovery message; and
feed the level number of the remote radio unit back to said base band unit,
so as to implement self-discovery of the remote radio unit and self-establishment of the topology structure.

8. The system as claimed in claim 7, wherein:
said base band unit is further configured to: periodically send a detection message to the link connecting with the remote radio unit, and receive a detection response, and adding the remote radio unit corresponding to the level number in a remote radio unit connection relationship if the level number included in the detection response is new;
said remote radio unit is further configured to: forward the detection message to the next level remote radio unit connecting with this remote radio unit after receiving the detection message;
said remote radio unit is configured to feed the level number of this remote radio unit back to the base band unit in a following way:
a remote radio unit of level number i returning a detection response to a previous level remote radio unit connecting with the remote radio unit of level number i after receiving the detection message, and the detection response including the level number stored by this remote radio unit; and transparently transmitting a received detection response to the previous level remote radio unit connecting with this remote radio unit, and 2≤i≤n;
a remote radio unit of level number 1 returning the detection response to the base band unit after receiving the detection message, and the detection response including the level number stored by the remote radio unit of level number 1; and transparently transmitting the received detection response to the base band unit.

9. The system as claimed in claim 9, wherein:
said base band unit is further configured to delete the remote radio unit of a known level number from said remote radio unit connection relationship if said base band unit does not receive the detection response sent by the remote radio unit of the known level number in the remote radio unit connection relationship in a pre-set time.

10. The system as claimed in claim 7, wherein said remote radio unit is configured to feed the level number back to said base band unit in a following way:
a remote radio unit of level number i sending a notification message to a previous level remote radio unit connecting with the remote radio unit of level number i after receiving the remote radio unit discovery message, and the notification message including the level number stored by this remote radio unit; and transparently transmitting a received notification message to the previous level remote radio unit connecting with this remote radio unit, and 2≤i≤n;
a remote radio unit of level number 1 sending the notification message to the base band unit after receiving the remote radio unit discovery message, and the notification message including the level number stored by the remote radio unit of level number 1; and transparently transmitting the received notification message to the base band unit;
said base band unit is further configured to: add the remote radio unit corresponding to the level number in a remote radio unit connection relationship if the level number in the notification message is new after receiving the notification message.

11. The system as claimed in claim 11, wherein:
said base band unit is further configured to: delete the remote radio unit of a known level number from said remote radio unit connection relationship if said base band unit does not receive the notification message sent by the remote radio unit of the known level number in the remote radio unit connection relationship in a pre-set time.

12. The system as claimed in claim 7, wherein:
said base band unit is configured to send the remote radio unit discovery message in a following way:
periodically sending said remote radio unit discovery message; and
denoting the level number of the remote radio unit using a remote radio unit discovery (RRU_Index) field in said remote radio unit discovery message, and setting a value of said RRU_Index field as i to denote that the remote radio unit is in a i+1th level.
